# EUROPEAN PATENT SPECIFICATION

(11) **EP 1 061 845 B1**
(45) Date of publication and mention of the grant of the patent: **09.04.2003**
(21) Application number: 98955911.7
(22) Date of filing: 20.11.1998
(51) Int. Cl.: A47K 11/04, A47K 13/14, A61G 9/00, A01K 23/00

(54) **HYGIENIC CONTAINER FOR TOILETS AND OTHER COLLECTORS OF URINE AND EXCREMENTS**
HYGIENISCHES BEHÄLTNIS FÜR TOILETTEN ODER ANDERE URIN UND EXKREMENTE SAMMELVORRICHTUNGEN
CONTENANT HYGIENIQUE DESTINE A DES TOILETTES ET A D'AUTRES DISPOSITIFS DE RECUPERATION D'URINE ET D'EXCREMENTS

(30) Priority: 09.03.1998 IT PI980018 U
(43) Date of publication of application: 27.12.2000
(73) Proprietor: Secchi, Salvatore, 56125 Pisa (IT)
(72) Inventor: Secchi, Salvatore, 56125 Pisa (IT)
(74) Representative: Bardini, Marco Luigi
(86) International application number: IT9800328
(87) International publication number: WO99045834

(56) References cited:
- EP-A- 0 296 143
- WO-A-86/04222
- DE-A- 2 103 449
- DE-A- 2 239 244
- DE-A- 3 305 265
- DE-A- 3 524 249
- FR-A- 2 631 225
- GB-A- 1 339 675
- GB-A- 2 229 699
- US-A- 4 269 148
- US-A- 4 882 794
- US-A- 4 996 727
- US-A- 5 146 874

## Description

### Technical Field

The invention relates to a paper-made product suitable to fit into a toilet device in order to reduce contamination both for the device and the user.

### Background Art

The hereby described invention aims at resolving the problem of maintaining an acceptable level of hygiene in so-called "Turkish" toilets and at contributing to reduce the waste of water and chemical products.

As known, toilets are inevitably contaminated in use. Said contamination is usually resolved by flushing the pan, by using brushing devices and by cleaning with chemical or hygienising products (liquids or dusts). In order to avoid hygienic problems for the users, especially in community's toilets, a paper-made disposable hygienic container can be provided, the shape of which fits the toilet bowl. The container is preliminarily inserted and fixed into the bowl. The faeces restraining action of the container decreases the possibility of contamination of the toilet. Thanks to the absorbing effect of the paper, splashes of excrements or squirts of dirty water or urine are prevented from spreading over the toilet and from reaching the user. The container is disposable by simply flushing the pan, and can be provided in a single-use package or by appropriate dispensers. Containers of this kind are disclosed for example in WO86/04222 and FR2631225.

### Disclosure of the invention

According to the present invention, a hygienic container for a so-called "Turkish" toilet, made of a biodegradable material, able to resist to the passage of liquids and to collect human faeces, without crumbling, for some minutes, is characterized by the fact that it comprises a flat film, fit to cover the whole surface of the toilet and providing a convex central part, suitable to be inserted into the hole of the toilet for a small length.

### Brief Description of the Drawings

For a fuller appreciation of the features and advantages afforded by the hygienic container according to the present invention, a preferred embodiment will now be described by way purely of example and implying no limitation with reference to the accompanying drawings, in which:

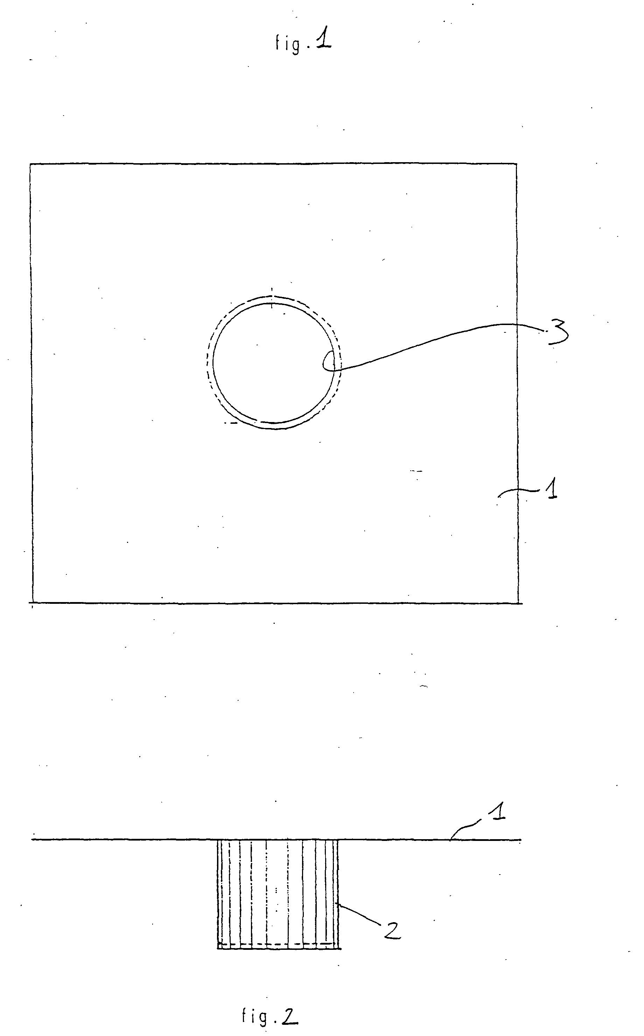

- figure 1 is a top plan view of the container according to the invention;
- figure 2 is a side view of the container of figure 1;

### Description of a preferred embodiment

With reference to the above drawings, the container according to the invention is formed by a flat film 1, fit to cover the whole surface of the toilet, not shown. Film 1 provides a central part 2, cylindrical in the depicted embodiment, able to fit into the hole of the toilet for a small length.

The container can be provided to users by appropriate dispensers, single-use packages or cumulative formats. It is sufficient for the user to arrange contral part 2 inside the hole of the toilet. On the other hand, no anchoring device is required, since in use the feet of the user, placed over film 1, keep the container in position.
Once the toilet has been used, the container is eliminated in a very easy way: it is left in it and carried away by the pan-flushing.

The described invention permits to maintain an acceptable level of hygiene, minimizing the contaminating impact of the use by the single person. Of course, it does not eliminate the need to clean the toilet or the other devices with the water and the chemical products. But it eliminates completely the use of brushing devices. Moreover, it does reduce the amount of water and chemical products required and the frequency of the cleaning operations. In particular, a smaller quantity of water would be necessary to flush in the toilets. The invention also ensures a better protection of the hygiene of the user.

The container is manufactured with paper, even recycled, permeable and biodegradable, but able to resist to the passage of liquids and to the collecting of human faeces without crumbling for some minutes.

Various trials have been conducted with regard to the resistance and degradability of several kinds of paper usually on sale. The paper used for dress-patterns resulted rather suitable: good resistance to faeces, but not full resistance to liquids. It started desegregating just after few minutes, especially in the lower part, inserted into the water. The roll tissue used in the kitchen has proved to be too resistant to the water, causing serious problems of obstruction of drainpipes. The same can be said of the paper-rolls used for physicians' beds. The toilet papers were tested as well. The high quality ones showed low resistance, desegregating too rapidly, while the low quality ones met all the characteristics of the inventive idea.

Lastly, the towel paper usually delivered in single tissues or in rolls was used. The result was that the most expensive one, being more resistant, raised problems of obstruction of drain pipes, while the economic kind, of less quality and resistance, was suitable to the aims of the invention.

Advantageously, the container may be manufactured with paper treated with disinfectant and/or germicidal substances, considering that Turkish toilets are destined to a collective use, thus having to be shared between a large number of users. As mentioned, it can be provided to users through dispensers, single-use packages, or cumulative formats.

Although the above description and the annexed drawings contain many specific features, these must not be construed as limiting the scope of the invention, but as merely providing practical illustrations of some of the possible embodiments of this inventive idea. In particular, different sizes can be realized, so as other equivalent materials can be used to make the hygienic container, provided that they are foldable and biodegradable.

It will be obvious to those skilled in the art that various changes, alterations and modifications to the containers described therein are feasible. To the extent such changes, alterations and modifications do not depart from the spirit and scope of the appended claims, they are intended to be encompassed therein.

## Claims

1. A hygienic container for a so-called Turkish toilet, made of a biodegradable material, able to resist to the passage of liquids and to the collecting of human faeces without crumbling for some minutes,
**characterized by** the fact that it comprises a flat film (1), fit to cover the whole surface of said toilet and providing a central part (2) suitable to be inserted into the hole of said toilet for a small length.

2. A container according to claim 1, wherein said central part (2) has a cylindrical shape.

3. A container according to any of the previous claims, wherein said biodegradable material is low quality toilet paper.

4. A container according to any of the previous claims, wherein said material is treated with disinfectant and/or germicidal substances.

## Patentansprüche

1. Ein hygienisches Behältinis, für ein so genannte türkischer Toilet, mit biodegradierbaren Stoff gemacht, das den durchgang der Flüssigkeiten tragen und die menschliche Exkrementen für einige Minuten ohne Zerstückeln erhalten kann, **dadurch gekennzeichnet, daß** es einen Planfilm (1) enthält, geeingnet die ganze Fläche zu der Toilet zu bedecken und mit einem zentralen Teil (2) der anpaßbar ist zu inseriert werden in die Höohlung der Toilet für eine kleine Zeitdauer.

2. Ein Behältnis nach Anspruch 1, wobei der te zentrale Teil (2) walzenförming ist.

3. Ein Behaltnis nach jede der obengenannten Anspruche, wobei das biodegradierbaren Stoff ist qualitätsniedrig Toiletpapier.

4. Ein Behältnis nach jede der obengennanten Ansprüche wobei das biodegradierbaren Stoff ist mit desinfektionsmittel und/oder bakterientötenden substanzen behandelt.

## Revendications

1. Un contenant hygiénique destiné aux cabinets à la turque, qui est réalisé avec un matériel biodégradable et est capable de résister au passage de liquides et de recevoir des fèces humaines sans émietter pour quelque minute, **caractérisé en ce qu'**il comporte un plat film (1) approprié pour couvrir l'entière surface du cabinet et fournir une partie centrale (2) capable d'être insérée dans le trou dudit cabinet sur une petite longueur.

2. Un contenant selon la revendication 1, où la dite partie centrale (2) a une forme cylindrique.

3. Un contenant selon une quelconque des revendications précédentes, où ledit matériel biodégradable est papier de toilette de pauvre qualité.

4. Un contenant selon une quelconque des revendications précédentes, où ledit matériel est traité avec des substances désinfectantes et/ou germicides.
